# EUROPEAN PATENT SPECIFICATION

(11) **EP 0 462 993 B1**
(45) Date of publication and mention of the grant of the patent: **13.07.1994**
(21) Application number: 90903842.4
(22) Date of filing: 07.03.1990
(51) Int. Cl.: A23L 1/308, C08B 30/10

(54) **PROCEDURE FOR PRODUCING FINE FIBRE, AND FINE FIBRE**
VERFAHREN ZUR HERSTELLUNG FEINER FASERN SOWIE FEINE FASERN
PROCEDE DE PRODUCTION DE FINE FIBRE, ET FINE FIBRE

(30) Priority: 08.03.1989 FI 891110
(43) Date of publication of application: 02.01.1992
(73) Proprietor: OY ALKO AB, 00101 Helsinki (FI)
(72) Inventor: KARINEN, Pertti, SF-05200 Rajamäki (FI); LEHTOMÄKI, Ilkka, SF-05200 Rajamäki (FI)
(74) Representative: Mossmark, Anders
(86) International application number: FI9000060
(87) International publication number: WO9010392

(56) References cited:
- EP-A- 0 228 951
- EP-A- 0 267 637
- WO-A-88/01138
- WO-A-88/08855
- US-A- 4 364 925
- US-A- 4 377 602

## Description

The present invention concerns a procedure for producing fine fibre containing cellulose and which is intended for use as raw material in the foodstuff and animal fodder industry.

The invention further concerns fine fibre that has been produced by said procedure.

It is customary in cereal processing processes of prior art to separate the fibrous material from the rest of the cereal product; e.g. in the grinding process, the husk fraction is separated from the rest of the grain material, as a rule. Further, when starch or alcohol is produced from cereal grains, the fibrous material contained in the grains, which often contains protein, is separated from the starch. An example of such a process for producing starch is described in the European Patent Application 267 637. Present fibrous materials of various types separated from cereal products have the following features in common: coarseness of the material, its splintery composition and dusting quality. Moreover, the protein frequently gives the product a bitter, unpleasant taste. Owing to these unfavourable characteristics the fibrous material in question has not been usable as such for raw material in the fodder industry only.

The object of the present invention is to eliminate these drawbacks.

The particular object of the invention is to provide a procedure by which the fibrous material separated from cereal products can be brought into a form which is usable in the foodstuff and animal fodder industry, that is, into a uniformly divided, splinter-free, substantially non-dusting and neutral-tasting form.

It is a further object of the invention to provide a novel cellulose-containing fibrous material which is suitable to be used as raw material in the foodstuff and animal fodder industry.

The invention is based on the fundamental idea that the cereal product is treated with an enzyme preparation, the product thus treated is homogenized, and the cellulose-containing, and powdery, fine fibre is separated from the homogenized product.

According to the invention a procedure is thus obtained for producing a cellulose-containing fine fibre product intended for raw material in the foodstuff and animal feed industry, wherein grains are ground, brans and chaffs are removed by sifting, the powder product obtained is treated in a manner known in itself in the art with an enzyme preparation which contains cellulase, hemicellulase, β-glucanase, pectinase and/or proteolytic activity, the treated product is homogenized and from the homogenized product the fibrous material is separated from the other grain matter by sifting, which is characterized in that the homogenized product is sifted through a coarse sieve of about 800 »m hole size to remove a coarse fibrous material, the product passed through the coarse sieve is sifted through a fins sieve of about 80 »m hole size and the product fallen between the coarse sieve and the fine sieve is collected as a fine fibre product.

When cereal products are treated with the aid of an enzyme preparation, the enzyme preparation exerts a softening and hydrolysing action on different constituents of the product whereby it becomes easier to liberate the fibrous material from the other constituents of the grain and to make fine fibre of the rest of the fibrous material. The enzyme preparation decomposes β-glucane, present in the fibrous material, whereby the fine fibre constituent therein is set free from the coarser fibrous material.

The enzyme treatment is carried out at a moisture content at which the proportion of cereal product and water is about 1:1 to 8:1, advantageously about 2:1 to 4:1.

The treatment time is e.g. 0,5 to 4 hours, suitable about 1 to 3 hours, advantageously about 2 hours.

The treatment temperature is about 0 to 70°C, suitably about 20 to 60°C, advantageously about 40 to 50°C.

To the cereal product is added enzyme preparation possessing e.g. cellulase, hemicellulase, β-glucanase, pectinase and/or proteolytic activity. The enzyme preparation may be a commercial preparation, e.g. a microbe cultivating solution containing one or several enzymes. The enzyme may be precipitated on a solid or liquid carrier. An advantageous enzyme preparation is the enzyme preparation obtained from the microbe Trichoderma viridae, e.g. the preparation Econase 20, which possesses the activities mentioned above.

The inherent enzymes of the cereal product may also be active during the enzyme treatment of the invention and thereby advantageously contribute to the formation of fine fibre.

Thanks to the enzyme treatment of the invention, from a cereal product is gained fine fibre according to the invention which presents the characteristics of freedom of splinters, uniform division, substantially non-dusting quality and neutral taste.

The homogenizing step employed in the procedure of the invention opens up fibre bundles of the fibrous material, without cutting any fibres. In an embodiment, the homogenizing step is carried out by grinding (rubbing) the fibre bundles. The enzyme treatment can be enhanced with the aid of homogenizing so that in the fibres under treatment new points of action are exposed to the enzymes. Homogenizing as taught by the invention promotes the forming of uniformly divided and nearly dust-free fine fibre.

In the procedure of the invention the fine fibre is ultimately separated from the product that has been obtained. Separation is advantageously performed by straining. In connection with treatment of cereal products the straining is usually implemented in two steps, so that coarse straining is first performed, using a coarse sieve with hole size e.g. about 2000 »m, suitably 800 »m, and thereafter a fine straining operation with a fine sieve, hole size e.g. about 40 »m, suitably about 80 »m.

Fine fibre consistent with the present invention can be produced from any cellulose-containing part whatsoever of cereal plants, such as plant stalks, grain husks, and/or grains without husk. Fine fibre may also be produced from fibre material obtained as a by-product in connection with existing cereal plant treatment processes.

A particularly advantageous raw material for producing fine fibre is the fibre fraction produced in connection with the starch producing process, which is normally used for animal feed; according to the present invention it is possible to produce therefrom salable products which are more profitable economically.

The invention is described in detail in the following, with the aid of embodiment examples, which are meant to illustrate the invention.

### Example: Producing fine fibre according to the invention, from cereal plants.

For starting material barley grains were used, which were dry-ground first, and whereafter bran and chaff were removed from the powder by sieving. Process water was added in a mixer to the flour thus obtained in proportions of 2,5:1 to 4:1, the water having been heated to about 40-50°C, and enzyme preparation Econase 20 (0,03-0,08% by weight), calculated on the total powder quantity. The mixture was mixed and transferred into a container for enzyme treatment. The enzyme treatment time was about 2 hours but it may vary according to the enzyme preparation quantity used. During the treatment the enzymes detached fibrous material from the other grain matter and set fine fibre material free from the coarser fibre material. The enzyme-treated product was dewatered and homogenized with a grinder.

The fine fibre was ultimately separated by sieving form the rest of the grain matter. The sieving was done in two steps, so that the homogenized product was first sieved with a coarse sieve having hole size about 800 »m, and subsequently with a fine sieve having hole size about 80 »m. The fraction falling between the coarse and fine sieves was recovered. The product obtained at sieving was washed with a small quantity of water arranged to run in counterflow relative to the sieving process. The fine fibre thus obtained was ultimately dewatered, and the fine fibre was dried.

## Claims

1. A fine fibre product to be used as raw material in the food stuff and animal feed industry wherein grains have been ground, brans and chaffs have been removed by sifting, the product obtained has been treated with an enzyme preparation which contains cellulase, hemicellulase, β-glucanase, pectinase and/or proteolytic activity, the enzyme treated material has been homogenized and from the homogenized product the fibrous material has been separated from the other grain matter by sifting, **characterized** in that the fine fibre product has been produced by sifting the homogenized product through a coarse sieve of about 800 »m hole size to remove a coarse fibrous material, by sifting the product passed through the coarse sieve through a fine sieve of about 80 »m hole size and by collecting the product fallen between the coarse sieve and the sieve as a fine fibre product.

2. Fine fibre according to claim 1, **characterized** in that the fine fibre has been homogenized by grinding (rubbing) after the enzyme treatment.

3. A procedure for producing a cellulose-containing fine fibre product intended for raw material in the foodstuff and animal feed industry, wherein grains are ground, brans and chaffs are removed by sifting, the powder product obtained is treated in a manner known in itself in the art with an enzyme preparation which contains cellulase, hemicellulase, β-glucanase, pectinase and/or proteolytic activity, the treated product is homogenized and from the homogenized product the fibrous material is separated from the other grain matter by sifting, **characterized** in that the homogenized product is sifted through a coarse sieve of about 800 »m hole size to remove a coarse fibrous material, the product passed through the coarse sieve is sifted through a fine sieve of about 80 »m hole size and the product fallen between the coarse sieve and the fine sieve is collected as a fine fibre product.

4. Procedure according to claim 3, **characterized** in that the enzyme-treated product is homogenized by grinding (rubbing).

## Patentansprüche

1. Produkt aus feinen Fasern zum Verwenden als Rohmaterial in der Nahrungsmittel- und Tierfutterindustrie, bei welchem Körner gemahlen worden sind, Kleie und Spreu durch Sieben entfernt worden sind, das erhaltene Produkt mit einer Enzymzubereitung behandelt worden ist, welche Cellulase, Hemicellulase, β-Glucanase, Pektinase und/oder eine proteolytische Aktivität enthält, das enzymbehandelte Material homogenisiert worden ist und aus dem homogenisierten Produkt das faserförmige Material von dem anderen Kornmaterial durch Sieben abgetrennt worden ist, dadurch gekennzeichnet, daß das Produkt feiner Fasern zum Entfernen eines groben, faserförmigen Materials durch Sieben des homogenisierten Produkts durch ein grobes Sieb mit etwa 800 »m Lochgröße, durch Sieben des durch das grobe Sieb hindurchgegangenen Produkts durch ein feines Sieb mit etwa 80 »m Lochgröße und durch Sammeln des zwischen das grobe Sieb und das feine Sieb als Produkt aus feinen Fasern fallenden Produkts hergestellt worden ist.

2. Feine Fasern gemäß Anspruch 1, dadurch gekennzeichnet, daß die feinen Fasern nach der Enzymbehandlung durch Mahlen (Reiben) homogenisiert worden sind.

3. Verfahren zum Herstellen eines cellulosehaltigen Produkts aus feinen Fasern, das als Rohmaterial in der Nahrungsmittel- und Tierfutterindustrie bestimmt ist, in welchem Körner gemahlen werden, Kleie und Spreu durch Sieben entfernt werden, das erhaltene Produkt in an sich in der Technik bekannter Weise mit einer Enzymzubereitung behandelt wird, welche Cellulase, Hemicellulase, β-Glucanase, Pektinase und/oder eine proteolytische Aktivität enthält, das behandelte Material homogenisiert wird und aus dem homogenisierten Produkt das faserförmige Material von dem anderen Kornmaterial durch Sieben abgetrennt wird, dadurch gekennzeichnet, daß das homogenisierte Produkt zum Entfernen eines groben, faserförmigen Materials durch ein grobes Sieb mit etwa 800 »m Lochgröße gesiebt wird, das durch das grobe Sieb hindurchgegangene Produkt durch ein feines Sieb mit etwa 80 »m Lochgröße gesiebt wird und das zwischen das grobe Sieb und das feine Sieb fallenden Produkt als Produkt aus feinen Fasern gesammelt wird.

4. Verfahren gemäß Anspruch 3, dadurch gekennzeichnet, daß das enzymbehandelte Produkt durch Mahlen (Reiben) homogenisiert wird.

## Revendications

1. Produit à base de fine fibre destiné à être utilisé comme matière première dans l'industrie alimentaire et des produits fourragers dans lequel des grains ont été moulus, le son et la menue paille ont été éliminés par tamisage, le produit obtenu a été traité par une préparation enzymatique douée d'activité cellulase, hémicellulase, β-glucanase, pectinase et/ou protéolytique, le produit ayant subi le traitement enzymatique a été homogénéisé et la matière fibreuse a été séparée à partir de ce dernier des autres constituants des grains par tamisage, caractérisé en ce que le produit à base de fine fibre a été fabriqué par tamisage du produit homogénéisé à travers un tamis à gros pores dont la taille est de 800 »m environ afin d'éliminer la matière fibreuse grossière, par tamisage du produit ayant traversé le tamis à gros pores à travers un tamis fin ayant une taille de pores d'environ 80 »m et par collecte du produit qui s'est déposé entre le tamis à gros pores et le tamis fin sous forme de produit à base de fine fibre.

2. Fibre fine selon la revendication 1, caractérisée en ce la fine fibre a été homogénéisée par mouture (friction) à la suite du traitement enzymatique.

3. Procédé de fabrication de produit à base de fine fibre contenant de la cellulose destiné à servir de matière première dans l'industrie alimentaire et des produits fourragers, dans lequel les grains sont moulus, le son et la menue paille sont éliminés par tamisage, le produit pulvérulent obtenu est traité de manière connue de l'art en soi par une préparation enzymatique douée d'activité cellulase, hémicellulase, β-glucanase, pectinase et/ou protéolytique, le produit traité est homogénéisé et la matière fibreuse est séparée à partir de ce dernier des autres constituants de grains par tamisage, procédé caractérisé en ce que le produit homogénéisé est tamisé à travers un tamis à gros pores dont la taille est d'environ 800 »m afin d'éliminer la matière fibreuse grossière, le produit ayant traversé le tamis à gros pores est tamisé à travers un tamis fin ayant une taille de pores d'environ 80 »m et par collecte du produit qui s'est déposé entre le tamis à gros pores et le tamis fin sous forme de produit à base de fine fibre.

4. Procédé selon la revendication 3, caractérisé en ce que le produit ayant subi le traitement enzymatique est homogénéisé par mouture (friction).
